# EUROPÄISCHE PATENTSCHRIFT

(11) **EP 2 060 515 B1**
(45) Veröffentlichungstag und Bekanntmachung des Hinweises auf die Patenterteilung: **27.10.2010**
(21) Anmeldenummer: 08019803.9
(22) Anmeldetag: 13.11.2008
(51) Int. Cl.: B65G 47/28

(54) **Vorrichtung und Verfahren zum gleichmäßigen Transport von Substraten**
Device and method to transport substrates evenly
Dispositif et procédé destinés au transport uniforme de substrats

(30) Priorität: 13.11.2007 DE 102007054091
(43) Veröffentlichungstag der Anmeldung: 20.05.2009
(73) Patentinhaber: Rena Sondermaschinen GmbH, 78148 Gütenbach (DE)
(72) Erfinder: Hübel,Egon, D-90537 Feucht (DE)
(74) Vertreter: Stürken, Joachim

(56) Entgegenhaltungen:
- US-A- 3 589 497
- US-A- 3 901 375

## Beschreibung

Die Erfindung betrifft eine Vorrichtung zum Transport von Gut gemäß dem Oberbegriff des Anspruchs 1 sowie ein Verfahren zum Transport von Gut gemäß den Oberbegriff des Anspruchs 11. Zur Förderung des Gutes in einer Transportebene und bevorzugt in einer Richtung dienen angetriebene Transportrollen oder Transportwalzen von z.B. so genannten Rollenförderern. Diese fördern das Gut in horizontaler Ausrichtung, unter anderem in Durchlaufanlagen. Bei den Anlagen kann es sich um Nassanlagen oder um Förderanlagen zur Trockenbehandlung von Gut handeln.

Ein Anwendungsgebiet betrifft den Transport von z.B. Substraten als Wafer, Solarzellen, Hybride oder um Leiterplatten, Glasscheiben, Bleche aus Metall oder Kunststoff und dergleichen. Diese Güter werden in der Durchlaufanlage nasschemisch oder elektrolytisch behandelt. Weitere Nassprozesse sind z.B. das Reinigen und Spülen. Zur Trockenbehandlung gehören alle Prozesse, die eine Förderung von Gut als flache Abschnitte oder räumliche Gegenstände auf Fördermitteln als Walzen Rollen, Scheiben, Rädchen oder dergleichen erfordern. Als Beispiel sei hier das präzise Positionieren und Bedrucken, Laminieren oder Beschreiben von Gut, das auf einem Transportgang gefördert wird, genannt. Bei kleinem Gut werden meist mehrere Güter parallel, d.h. quer zur Transportrichtung angeordnet, gefördert.

### Stand der Technik und Nachteile

Die Anlagen sind in der Regel in Transportrichtung lang, z.B. 10 Meter und mehr. Im Vergleich hierzu sind die zu fördernden Güter sehr kurz. Von daher ist beim Transport derselben mit Toleranzen sowohl in der Spurgenauigkeit als auch im Vorschub zu rechnen, insbesondere dann, wenn nur untere Fördermittel das Gut fördern. Korrekturmaßnahmen zum Toleranzausgleich sind unerlässlich. Die vorliegende Erfindung beschreibt Korrekturmaßnahmen zur Behebung von Abweichungen des Vorschubs in Folge eines Schlupfes vom theoretischen Vorschub des Gutes in der Förderanlage.

Bei bestimmten Anwendungen ist eine reproduzierbare Förderung eines kurzen Gutes in Transportrichtung erforderlich. Zum Beispiel beim Bedrucken des Gutes oder beim Handhaben und Montieren muss an einer bestimmten Position der Förderanlage mindestens in Transportrichtung stets die gleiche Lage jedes Gutes in Bezug zur Lage der Fördermittel an dieser Position erreicht werden. Beim Transport des Gutes kann ein nicht reproduzierbarer Schlupf diese Beziehung stören.

Die Druckschrift DE 10 2005 062 527 A1 beschreibt eine Durchlaufanlage für Substrate, die mittels horizontal angeordneter Transportwalzen gefördert werden. Weil die Substrate nur auf unteren rotierenden Transportwalzen aufliegen, ist in Transportrichtung mit besonders großem Schlupf zu rechnen. In Abhängigkeit von der Anlagenlänge wird deshalb eine entsprechend große Querlücke zwischen zwei Gütern bei der Beschickung eingefügt, damit es nicht zu einem aufeinander Auflaufen der Güter kommt. Die Nassbehandlung erfordert bei dieser Erfindung keine reproduzierbaren Lagen der Güter zu den Fördermitteln. Gleiches gilt für die Durchlaufanlage mit unteren und oberen Fördermitteln, die in der Druckschrift DE 197 18 769 A1 dargestellt ist. Wegen der unten und oben angeordneten Transportwalzen ist mit einem kleineren Schlupf des Gutes beim Transport zu rechnen. Jedoch ist auch hier eine genaue und reproduzierbare Lage jedes Gutes in Bezug zu einer vorgegebenen Anlagensituation entlang der Durchlaufanlage nicht sicherzustellen. Die Druckschrift US 3 589 497 A1 offenbart eine Vorrichtung zum Transport von Gut gemäß dem Oberbegriff des Anspruchs 1 sowie ein Verfahren gemäß dem Oberbegriff des Anspruchs 11. Aufgabe der Erfindung ist es, eine Vorrichtung und ein Verfahren zur Korrektur des Schlupfes zu beschreiben, der beim Transport von flachem Gut oder räumlichen Gegenständen in Förderanlagen bzw. in Durchlaufanlagen oder in anderen transportierenden Anlagen auftritt. Insbesondere sollen sie auch für sehr bruchempfindliches Gut geeignet sein und die Länge der Durchlaufanlage nicht vergrößern.

Gelöst wird die Aufgabe durch die Vorrichtung nach Patentanspruch 1 und durch das Verfahren nach Patentanspruch 11. Die Unteransprüche beschreiben vorteilhafte Ausführungen der Erfindung.

### Beschreibung

Die Erfindung eignet sich besonders für angetriebene Transportwellen, die entlang der Transportbahn mindestens an der Unterseite und gegebenenfalls auch an der Oberseite des zu transportierenden Gutes angeordnet sind. Auf den Wellen befinden sich Transporträdchen oder Transportwalzen und dergleichen.

Die erfindungsgemäße Schlupfkorrektur geht davon aus, dass das Gut in Folge eines Schlupfes die theoretische bzw. nominale Transportgeschwindigkeit nicht erreicht und damit entlang der Transportbahn mehr und mehr zurückbleibt. Diese nominale Transportgeschwindigkeit entspricht der Umfangsgeschwindigkeit der Transportmittel, d.h. der Transportwalzen. Bei der Korrektur muss demnach das Gut kurzzeitig über die Transportgeschwindigkeit hinaus beschleunigt werden, um die theoretisch vorbestimmt Lage in Bezug zu den rotierenden Fördermitteln wieder einzunehmen. Hierzu dient mindestens ein Korrekturmittel, bevorzugt zwei für jede Spur von parallel durch die Durchlaufanlage gefördertem Gut. Diese Korrekturmittel sind in einer besonders kostengünstigen Ausführung der Erfindung mit dem Antrieb der quer zur Transportrichtung angeordneten Transportwalzen synchronisiert. Die Transportwalzen ihrerseits sind ebenfalls untereinander über z.B. Kegelzahnräder oder Zahnriemen mit einer angetriebenen Transmissionswelle, die entlang der Durchlaufanlage angeordnet ist, synchronisiert. Diese gegebenen Synchronisationen ermöglichen es, dass die Korrekturmittel immer dann die Transportebene kurzzeitig durchdringen können, wenn sich in ihrem Aktionsbereich eine Querlücke zwischen zwei aufeinander folgenden und in Transportrichtung gleich langen und voneinander beabstandeten Gütern befindet. Nach den bevorzugt von unten nach oben bewegten Korrekturmitteln über die Transportebene hinaus werden dann diese Korrekturmittel schneller als die nominale Transportgeschwindigkeit für eine kurze, vorbestimmte Strecke in Transportrichtung bewegt. Diese Korrekturstrecke wird durch Anschläge begrenzt. Sie ist unabhängig von dem momentan bestehenden Schlupf dimensioniert. Dies vereinfacht die Steuerung der Korrekturmittel wesentlich. Bei der Korrektur wird ein durch Schlupf unkontrolliert zurückgebliebenes Gut wieder in die definierte Position in Transportrichtung gebracht, die von der nominalen Transportgeschwindigkeit vorgegeben ist. Sofort anschließend tauchen die Korrekturmittel wieder unter die Transportebene ab, damit das nachfolgende Gut nicht blockiert wird. Dieses Gut wird dann ebenfalls wie beschrieben in die definierte, von der Transportgeschwindigkeit theoretisch vorbestimmte Lage vorwärts geschoben, falls ein Schlupf vorliegt.

Innerhalb der zulässigen Toleranzbreite des Schlupfes kann auch eine Überkorrektur erfolgen, d.h. das Gut wird über die theoretische Lage hinaus nach vorn geschoben. Dies verlängert die Strecke zwischen zwei Korrekturstellen entlang der Durchlaufanlage.

Die Korrekturmittel werden nachfolgend auch als Mitnehmer bezeichnet. Ihre beschriebenen Bewegungen werden bevorzugt von Nocken- und Kurvensteuerungen durchgeführt, wobei die Antriebe hierfür von den Antrieben der Fördermittel abgeleitet werden.

Bei nicht synchronisierten Fördermitteln und/oder bei mindestens in Transportrichtung unterschiedlich langem Gut sind die erfindungsgemäßen Korrekturmittel ebenfalls anwendbar. Ein Mitnehmer durchdringt die Transportebene, wenn sich in seinem Aktionsbereich gerade eine Querlücke zwischen zwei aufeinander folgenden Gütern befindet. Dann erfolgt die schnelle Vorwärtsbewegung des Mitnehmers und damit des Gutes über die nominale Transportgeschwindigkeit hinaus für eine bestimmte Strecke. Dabei wird ein mit Schlupf behaftetes Gut durch Vorschieben korrigiert. Sofort danach taucht der Mitnehmer wieder unter die Transportebene und geht in die Ausgangslage in Bereitschaft zum nächsten Korrigieren zurück. Bei diesen nicht synchronisierten Antrieben und/oder bei Umfängen der Transportmittel bzw. der Transportwalzen, die in keiner bestimmten mathematischen Beziehung zur Bruttogutlänge stehen, wird der Startzeitpunkt der Bewegungen des Mitnehmers von mindestens einem Sensor bestimmt, der die Querlücke detektiert. In diesem Falle steuert die Bewegungen des Mitnehmers das Steuerungssystem der Durchlaufanlage, die auch so ablaufen, wie sie bei der Nockensteuerung beschrieben wurden.

Die Sensoren erkennen die Lage der momentanen Querlücke der Güter in Bezug zur Lage mindestens eines nahe gelegenen Mitnehmers. Zur Korrektur des Schlupfes werden die Bewegungen des Mitnehmers von Sensoren und gesonderten, insbesondere elektrischen oder pneumatischen Antrieben gesteuert bzw. angetrieben. Die Zeitpunkte der Korrekturbewegungen ermittelt das Steuerungssystem der Durchlaufanlage zusammen mit den Sensoren. Als Antriebsmittel eignen sich z.B. elektrische oder pneumatische Zylinder oder Motoren.

Die Korrekturmittel wirken auf die rücklaufende Kante des flachen Gutes, das in dieser Richtung sehr stabil und nicht bruchempfindlich ist. Von daher kann auch sehr bruchempfindliches Gut gleichmäßig, d.h. frei von Schlupf transportiert werden. Die rücklaufende Seite von räumlichen Gegenständen ist in der Regel nicht empfindlich, so dass auch diese Korrektur problemlos erfolgen kann.

Besonders vorteilhaft ist es, dass für die Bewegungen des Mitnehmers zum Ausrichten des Gutes bevorzugt kein gesonderter Antrieb erforderlich ist. Die Erfindung wird nachfolgend an Hand der schematischen und nicht maßstäblichen Figuren 1 bis 4 detailliert beschrieben.

### Figurenbeschreibung

**Figur 1** zeigt den auftretenden Schlupf des Gutes beim . Transport in einer Anlage nach dem Stand der Technik.
**Figur 2** zeigt einen Transport von Gut, der frei von Schlupf ist, was durch die Erfindung erreicht werden soll.
**Figur 3** zeigt den zeitlichen Ablauf der Korrektur des Schlupfes an einer Position der Durchlaufanlage.
**Figur 4** zeigt den zeitlichen Ablauf an einem Ausführungsbeispiel der erfindungsgemäßen Vorrichtung mit einem elastischen Mitnehmer an einer Position der Durchlaufanlage zu den Zeitpunkten t1, t2 und t3.

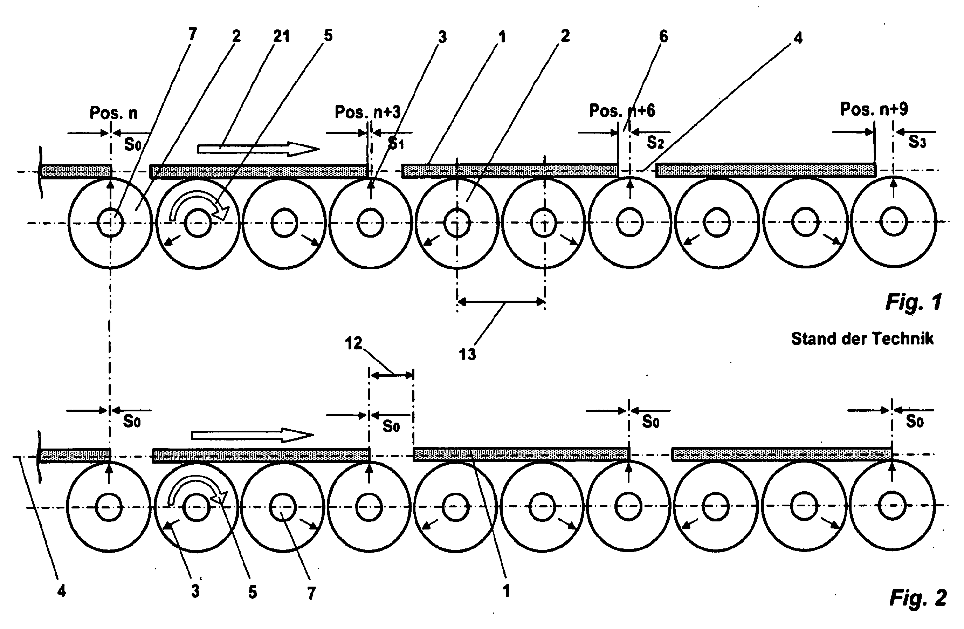

Die **Figur 1** zeigt einen Rollenförderer im Ausschnitt mit unteren Transportwalzen 2, die in diesem Beispiel ohne obere Transportwalzen das Gut 1 in Transportrichtung 21 und im Bereich der Transportebene 4 fördern. Die Winkelstellung oder Phasenlage der Transportwalzen 2 wird mittels der Phasenpfeile 3 gekennzeichnet. Die Transportwalzen 2 befinden sich auf Wellen 7, die miteinander synchronisiert von einem durch den Antriebspfeil 5 symbolisierten gemeinsamen Antrieb in Rotation versetzt werden. Die Umfangsgeschwindigkeit der Transportwalzen 2 ist zugleich die theoretische oder nominale Transportgeschwindigkeit, die ein Gut nur beim Transport ohne jeglichen Schlupf erreicht. In der Praxis tritt bei Röllenförderern, so wie ihn die Figur 1 zeigt, ein Schlupf S auf. Entlang der Transportbahn kumulieren sich die Schlupfstrecken Si. Dadurch nimmt die Abweichung der Lage des Gutes 1 von der theoretisch vorbestimmten Lage in Bezug zu den synchronisierten Transportwalzen 2 entlang der Transportbahn zu. Entsprechend nimmt die Länge der Querlücke zwischen zwei aufeinander folgenden Gütern ab. Bei sehr langen Durchlaufanlagen und/oder bei kurzen Querlücken, die bei der Beschickung der Durchlaufanlage gebildet werden, können die Güter nach einer bestimmten Transportstrecke aufeinander auflaufen, was unzulässig ist. Um dies zu vermeiden, wird nach dem Stand der Technik die Synchronisation der Transportwalzen nur auf kürzere Bereiche beschränkt. Entlang der Transportstrecke wird dann die Transportgeschwindigkeit bereichsweise zunehmend geringfügig erhöht, um das auflaufende Gut wieder auseinander zu fördern. Ein exakter Bezug der Lage des Gutes 1, z.B. der vorlaufenden Kante, zur Winkelstellung der Transportwalzen in jeder Position der Durchlaufanlage ist damit nicht sicherzustellen, auch wenn die weiteren dafür erforderlichen Dimensionierungen der Antriebsmittel erfolgen sollten. In der Regel führt dies zur Beschädigung des Gutes und/oder zu einem Stau der geförderten Güter. Daher sind nach bestimmten Abständen in Transportrichtung aus Sicherheitsgründen Maßnahmen zur Korrektur des Schlupfes erforderlich. Die Abstände dieser Vorrichtungen in Transportrichtung richten sich nach der mechanischen Präzision der Transportmittel in Bezug zur zulässigen Toleranz des Vorschubes. Aus Gründen der Sicherheit sollten die Abstände klein gehalten werden, z.B. nach jedem Meter. Dagegen sprechen die dafür aufzuwendenden Kosten und gegebenenfalls der erforderliche Raum zur Unterbringung der Konstruktionselemente, wodurch die Anlage in Transportrichtung verlängert wird.

Die erfindungsgemäße Vorrichtung lässt sich überraschend mit vergleichsweise kostengünstigen Mitteln realisierten. Sie benötigt auch keinen zusätzlichen Raum in Transportrichtung. Von daher kann die Vorrichtung in kürzeren Abständen in der Durchlaufanlage eingebaut werden, wodurch die Transportsicherheit wesentlich erhöht wird.

Diesen idealen reproduzierenden Transport des Gutes 1 zeigt die **Figur 2****.** Die vorlaufende Kante trifft stets exakt dieselbe Winkelstellung der Transportwalzen 2. Diese Situation des Transportes frei von Schlupf, der an jeder Position der Durchlaufanlage nahezu null ist, und daher mit S0 bezeichnet ist, wird durch die Erfindung erreicht.

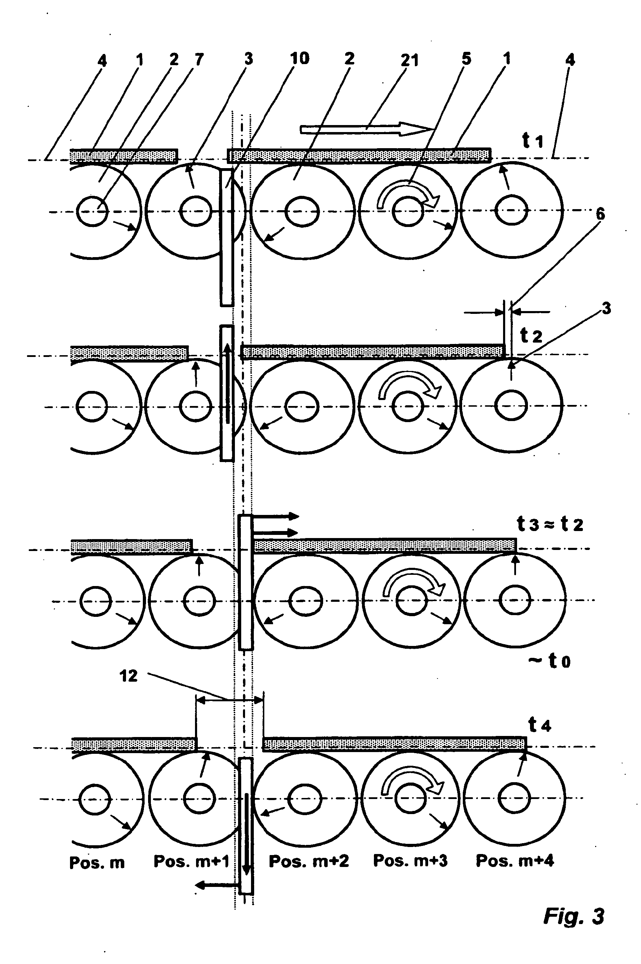

Die **Figur 3** zeigt eine Korrekturstelle, die sich zwischen den Positionen m+1 und m+2 einer Durchlaufanlage befindet. Diese Figur 3 zeigt den grundsätzlichen erfindungsgemäßen Ablauf der Korrektur des Schlupfes 6. Zur Zeit t1 befindet sich das Korrekturmittel, nämlich der Mitnehmer 10 unterhalb der Transportebene 4. Unmittelbar nach dem Passieren der rücklaufenden Kante des Gutes 1 wird der Mitnehmer 10 angehoben. Dabei durchdringt er mindestens die Transportebene 4 zur Zeit t2. Dies erfolgt bevorzugt unabhängig davon, ob ein Schlupf 6 des Gutes vorliegt oder nicht, um zusätzlichen Steuerungsaufwand zu vermeiden. Im Zeitpunkt t2 ist der bis zu dieser Position der Anlage aufgelaufene Schlupf 6 dargestellt. Die vorlaufende Kante des Gutes 1 soll die Winkellage der Transportwalze treffen, die mit dem Phasenpfeil 3 markiert ist. Zur Zeit t3, die sofort nach dem Zeitpunkt 2 erreicht wird, erfolgt eine schnelle Vorwärtsbewegung des oder der Mitnehmer 10 bis zu einer vorgegebenen Begrenzung. Diese ist so eingestellt, dass der Schlupf 6 aufgehoben oder überkorrigiert wird bis zur zulässigen Toleranz in Transportrichtung. Dadurch kann der Schlupf symmetrisch zur Nulllage bei S0 tolerieren. Nach der kurzzeitigen Korrektur bewegt sich der Mitnehmer 10 wieder aus der Transportbahn heraus unter die Transportebene, so dass es nicht zur Kollision mit dem nachfolgenden Gut 1 kommen kann. Nach der Zeit t4 nimmt der Mitnehmer 10 wieder die Lage ein, die zur Korrektur des nächsten Gutes erforderlich ist. Dann folgt erneut die Situation zur Zeit t1. Die Bewegungen des Mitnehmers 10 können durch gesteuerte Antriebe, wie beschrieben erfolgen. Zur Einsparung von Kosten für die Korrekturmittel wird bevorzugt eine Nockensteuerung verwendet.

Nach der Korrektur zwischen den Positionen m+1 und m+2 ist erst nach mehreren Positionen erneut zu korrigieren. Die Länge des Bereiches ohne Korrekturmittel richtet sich nach den allgemeinen Bedingungen des Transportes in der Durchlaufanlage. Die Anzahl der gleichartig quer zur Transportrichtung angeordneten Mitnehmer richtet sich nach der Breite des Gutes in dieser Richtung. Für jede Transportspur ist mindestens ein Mitnehmer, bevorzugt zwei vorzusehen. Es können auch mehrere sein, insbesondere wenn das Gut breit ist und wenn die Querlücke zwischen zwei aufeinanderfolgenden Gütern klein ist. Eine kleine Querlücke erlaubt eine optimale Kapazitätsausnutzung der Durchlaufanlage. Dieser Fall besteht z.B. bei einer Durchlaufanlagen zur Behandlung von Leiterplatten. Meist gibt es wegen deren großer Breite nur eine Transportspur.

Das Gegenteil ist der Fall beim Transport von Wafern, Hybriden oder Solarzellen. Hier können z.B. 10 Spuren zur parallelen Förderung des Gutes vorkommen. Derartig kleines Gut mit einer Fläche von z.B. 1 dm² ist für eine Produktionsanlage in der Regel stets gleich groß. Dies wird vorteilhaft für die erfindungsgemäße Vorrichtung mit einer Nockensteuerung für stets gleich langes Gut in Transportrichtung genutzt:

Die Nockensteuerung benötigt keine zusätzlichen elektrischen Steuerungskomponenten und Sensoren. Die Bewegungen der Mitnehmer 10 werden von den vorhandenen Antrieben für den Transport des Gutes abgeleitet. Um dies zu ermöglichen, muss der Umfang u der Transportwalzen so groß gewählt werden, wie die Länge L_{g} des Gutes plus die Länge L_{qlü} der Querlücke beträgt. Die Summe der Längen L_{g} + L_{qlü} wird nachfolgend als Bruttogutlänge L_{gbr} bezeichnet. Des weiteren müssen die Antriebe aller Transportwalzen untereinander synchronisiert, d.h. in einer unveränderlichen Beziehung stehen. Dies ist bei den bekannten Durchlaufanlagen gegeben. Eine Transmissionswelle entlang der Transportbahn treibt formschlüssig mittels Kegelzahnräder oder Zahnriemen die Wellen der Transportwalzen an. Gleiches wird durch elektrische Synchronantriebe erreicht. Unter diesen Voraussetzungen steht jedes Gut nach der Förderung einer Bruttogutlänge L_{gbr} exakt wieder dem gleichen Phasenwinkel ϕ des Fördermittels gegenüber. Durch Verdrehen und Fixieren der Transportwalzen auf den Wellen 7 erfolgt die zum Treffen der Querlücke durch den Mitnehmer günstigste Phaseneinstellung einmalig bei der Inbetriebnahme der Durchlaufanlage.

Für einen bestimmten, sich immer wiederholenden Startzeitpunkt des Gutes in die Durchlaufanlage werden die Phasenwinkel ϕ der Fördermittel und damit der Nocken so eingestellt und fixiert, dass die Mitnehmer beim Durchdringen der Transportebene im richtigen Zeitpunkt die Querlücke treffen und nicht das Gut.

Zur Vermeidung von vielen individuellen Einstellungen der Phasenwinkel ϕ einzelner Transportwalzen entlang der Transportbahn sind definierte Abstände 13 der Wellen 7 der Transportwalzen in Transportrichtung einzuhalten. Der Abstand 13 kann der Bruttogutlänge L_{gbr} entsprechen. Er kann auch ein Vielfaches oder ein Stammbruchteil von L_{gbr} betragen. In diesen Fällen ergeben sich zum Treffen der Querlücke durch die Mitnehmer gleiche Einstellungen der Phasenwinkel ϕ für alle Transportwalzen auf allen Wellen 7 der Durchlaufanlage, die Mittel zur Steuerung der Mitnehmer aufweisen. Dazwischen können auch nicht steuernde rotierende oder nicht rotierende Transportmittel angeordnet sein.

In diesen Fällen ergeben sich zum optimalen Anströmen oder Anschwallen des Gutes gleiche Einstellungen der Phasenwinkel ϕ für die Transportmittel auf allen Wellen der Durchlaufanlage, die Mittel zur Steuerung der Anströmung der Unterseite aufweisen. Dazwischen können auch nicht steuernde Transportmittel angeordnet sein.

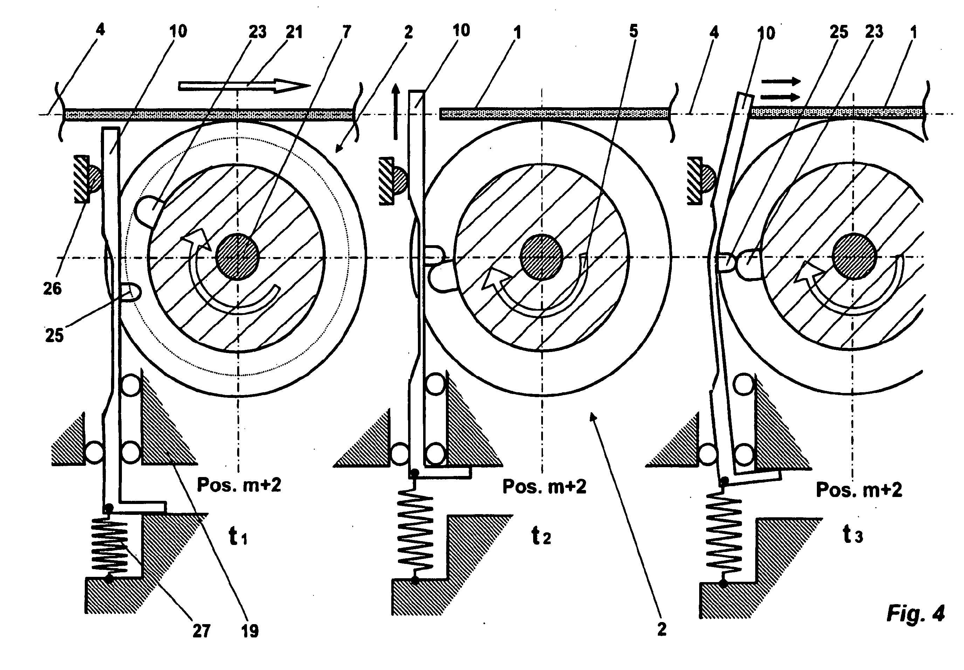

Die **Figur 4** zeigt in der Seitenansicht eine Nockensteuerung an der Position m+2 gemäß der Figur 3 zu den Zeitpunkten t1, t2 und t3. Die Transportwalze 2 ist an den Stellen, an denen in axialer Richtung Mitnehmer 10 angeordnet werden sollen, mindestens um die Breite der Mitnehmer 10 eingedreht mit einer Tiefe, die zur Aufnahme der Mittel zur Nockensteuerung ausreicht. Zur Zeit t1 wird das Gut 1 gefördert. Die Nocke 23 befindet sich entfernt von der Gegennocke 25 des Mitnehmers 10. Kurz vor dem Zeitpunkt t2 wurde die Gegennocke 25 von der mit der Transportwalze 2 rotierenden Nocke 23 erfasst. Dadurch wurde der Mitnehmer 10 nach oben mitgenommen, wobei er die Transportebene 4 durchdrang. Der Anschlag 19 begrenzt die Hubbewegung des Mitnehmers 10, der in seinem mittleren Bereich elastisch ausgeführt ist, z.B. durch einen verjüngten elastischen Kunststoff oder durch einen anderen Federwerkstoff. Eine weitere vertikale Bewegung des Mitnehmers durch die Nocke 23 ist wegen des Anschlages 19 nicht möglich. Eine Konsole 26 lässt auch ein Ausweichen des Mitnehmers gegen die Transportrichtung nicht zu. Im Zeitpunkt t3 bewegt sich die Nocke 23 daher an der ausweichenden Gegennocke 25 vorbei. Das Ausweichen bewirkt ein kurzzeitiges Verbiegen des Mitnehmers, wobei sich in Folge der Hebelübersetzung das obere Ende schnell in Transportrichtung bewegt. Ein mit Schlupf behaftetes Gut 1 wird dabei korrigierend vorwärts geschoben. Bei weiterer Rotation der Transportwalze 2 nimmt der Mitnehmer wieder. seine gestreckte Lage ein. Eine Zugfeder 27 zieht zugleich den Mitnehmer wieder in seine Ausgangslage, wie zur Zeit t1 dargestellt, bis unterhalb der Transportebene 4 zurück. Die Übergangsgeschwindigkeiten der Bewegungen, d.h. die Beschleunigungen des Mitnehmers können durch die Formgebung der Nocken 23 und der Gegennocken 25 beeinflusst, d.h. begrenzt werden.

Diese Ausführung der Erfindung erfordert einen geringen technischen Aufwand. Von daher können in kürzeren Abständen in Transportrichtung derartige Mitnehmer eingefügt werden. Sie erfordern eine sehr kurze Querlücke zwischen zwei aufeinander folgenden Gütern. Diese kann deutlich kleiner. sein, als sie nach dem Stand der Technik erforderlich ist, weil bei diesem mit einer großen Querlücke das beschriebene Auflaufen verhindert werden muss.

Durch häufigere Korrekturstellen entlang der Durchlaufanlage ist die erforderliche Korrekturstrecke, bzw. der zu korrigierende Schlupf klein. Dies erhöht insgesamt die Präzision des Transportes in einer Durchlaufanlage oder auf einem Rollenförderer.

Die Erfindung eignet sich auch für in sich starre Mitnehmer. Diese werden von Nocken und Nockenbahnen gesteuert, die sich auf zwei aufeinander folgenden Transportwalzen unterhalb der Transportebene befinden. Durch die zweig gleichartigen Ausführungen der Nocken und Nockenbahnen wird eine Parallelführung des Mitnehmers erreicht. Er durchdringt die Transportebene durch eine vertikale Bewegung. In dieser Lage wird er von einer Feder beschleunigt in Transportrichtung gezogen und sofort anschließend durch die Nocken wieder unterhalb der Transportebene abgesenkt, um eine Kollision mit dem nachfolgenden Gut zu vermeiden.

Die Vorrichtungen zur Korrektur des Schlupfes von Gut wurden vorstehend mit Mitnehmern, die weitgehend unterhalb der Transportebene 4 angeordnet sind, beschrieben. Alle Vorrichtungen zur Korrektur können auch an oberen Transportwalzen spiegelbildlich mit entsprechenden Fixpunkten angeordnet werden.

### Bezugszeichenliste

- 1: Gut, Abschnitt, räumliche Gegenstände
- 2: untere Transportwalze, Transport-/Förder-/Antriebsmittel
- 3: Phasenpfeil
- 4: Transportebene
- 5: Antriebspfeil
- 6: Schlupf
- 7: Welle
- 10: Mitnehmer, Korrekturmittel
- 12: Querlücke
- 13: Abstand
- 19: Anschlag
- 21: Transportrichtungspfeil, Transportrichtung
- 23: Nocke
- 25: Gegennocke
- 26: Konsole
- 27: Zugfeder

- S: Schlupf

## Patentansprüche

1. Vorrichtung zum Transport von Gut (1) als Abschnitte oder räumliche Gegenstände, die in horizontaler Ausrichtung in einer Transportsbene (4) mindestens von unteren, rotierend angetriebenen Fördermitteln (2) in einer Durchlaufanlage oder auf anderen transportierenden Anlagen beabstandet die Fördermittel als Transportwalzen, Rollen, Scheiben oder Rädchen ausgebildet sind und voneinander förderbar sind, wobei in Transportrichtung (21) zwischen den Fördermitteln (2) mindestens ein Korrekturmittel (10) quer zur Transportrichtung angeordnet ist, **dadurch gekennzeichnet, dass** das Korrektormittel die Transportebene (4) im Bereich einer Querlücke (12) zwischen zwei aufeinander folgenden Gütern nur zeitweiser durchdringt und in dieser Lage eine begrenzte Bewegung in Transportrichtung ausführt, die schneller ist als die nominale Transportgeschwindigkeit des Gutes.

2. Vorrichtung nach Patentanspruch 1, **dadurch gekennzeichnet, dass** die Begrenzung der Bewegung der Korrekturmittel als Mitnehmer (10) in Transportrichtung des Gutes unabhängig vom momentanen Schlupf durch Konstruktionselemente als Anschläge (19) oder Schubbegrenzungen erfolgt.

3. Vorrichtung nach Patentanspruch 1 oder 2, **dadurch gekennzeichnet, dass** die Bewegungen des Korrekturmittels mittels Nocken (23, 25) aus den rotierenden Bewegungen der Fördermittel abgeleitet werden.

4. Vorrichtung nach Patentanspruch 1 oder 2, **dadurch gekennzeichet, dass** die Bewegungen des Korrekturmittiels durch elektrische oder pneumatische Antriebe erfolgen.

5. Vorrichtung nach 4 Patentanspruch 2 unit oder 3, **dadurch gekennzeichnet, dass** durch Nocken (23, 25), Anschläge (19) und oder Konsolen (26) ein mindestens teilweise elastischer Mitnehmer (10) durch Hebelübersetzung im Bereich der Durchdringung der Transportebene in Transportrichtung beschleunigt wird.

6. Vorrichtung nach einem der Patentansprüche 2 bis 5, **dadurch gekennzeichnet, dass** ein in sich starrer Mitnehmer von Nocken, die auf zwei in Transportrichtung folgenden Transportwalzen (2) angeordnet sind, gesteuert und bewegt wird.

7. Vorrichtung nach einem der Patentansprüche 2 bis 6, **dadurch gekennzeichnet, dass** ein Sensor zur Erfassung der Querlücken zwischen zwei aufeinander folgenden Gütern die Bewegungen des Mitnehmers initiiert.

8. Vorrichtung nach einem der Patentansprüche 1 bis 7, **dadurch gekennzeichnet, dass** bei Gut, das in Transportrichtung stets gleich lang ist und das fortlaufend mit gleich langer Querlücke beschickt wird, in Verbindung mit synchronisierten Antriebsmitteln der Durchlaufanlage und mit einem Umfang jedes Antriebsmittels, der in einer festen mathematischen Beziehung zur Länge des Gutes plus der Länge der Querlücke steht, die Bewegung (en) des oder der Korrekturmittel durch Nocken erfolgen, wobei diese Nocken so in ihrer Phasenlage eingestellt sind, dass beim Durchdringen der Mitnehmer durch die Transportebene stets die Querlücke zwischen zwei aufeinander folgenden Gütern kollisionsfrei getroffen wird.

9. Vorrichtung nach einem der Patentansprüche 1 bis 8, **dadurch gekennzeichnet, dass** der Umfang jedes Antriebsmittels der Länge des Gutes plus der Länge der Querlücke entspricht, oder ein ganzzahliges Vielfaches dieser Summe ist.

10. Vorrichtung nach einem der Patentansprüche 1 bis 9, **dadurch gekennzeichnet, dass** die Korrekturmittel (10) an den unteren Transportwalzen (2) oder an oberen Antriebsmitteln angeordnet sind.

11. Verfahren zum Transport von Gut (1) als Abschnitte oder räumliche Gegenstände, die in horizontaler Ausrichtung in der Transportebene (4) mindestens von unteren, rotierend angetriebenen Fördermitteln (2) als Transportwalzen, Walzen, Rollen, Scheiben oder Rädchen in einer Durchlaufanlage oder auf anderen transportierenden Anlagen beabstandet voneinander förderbar sind, unter Verwendung der Vorrichtung nach Patentanspruch 1, **dadurch gekennzeichnet, dass** ein durch Schlupf zurückgebliebenes Gut durch mindestens einen Mitnehmer (10) mit einer Geschwindigkeit, die größer ist als die Transportgeschwindigkeit, in Transportrichtung (21) geschoben wird, wenn sich eine Querlücke (12) zwischen zwei aufeinander folgenden Gütern im Aktionsbereich des Mitnehmers befindet.

12. Verfahren nach Patentanspruch 11, **dadurch gekennzeichnet, dass** das schnelle kurzzeitige Vorwärtsschieben bis zur vollständigen Korrektur des Schlupfes oder über diese Korrektur hinaus bis zum maximal zulässigen Schlupf erfolgt.

13. Verfahren nach Patentanspruch 11 oder 12, **dadurch gekennzeichnet, dass** synchron angetriebene Transportmittel und Nocken (23) die Bewegungen des Mitnehmers zur Korrektur des Schlupfes steuern und antreiben, nämlich Durchdringen der Transportebene, schnelles Mitnehmen bzw. Vorschieben des Gutes und sofort anschließendes Verlassen der Transportebene durch den Mitnehmer in Richtung zur Ausgangsposition.

14. Verfahren nach einem der Patentansprüche 11 bis 13, **dadurch gekennzeichnet, dass** synchronisierte Antriebe der rotierenden Transportmittel (2), die ihrerseits einen Umfang haben, der der Länge des Gutes in Transportrichtung plus der Länge der Querlücke in der selben Richtung entspricht, die Bewegungen der Mitnehmer mittels Nocken (23, 25) steuern und antreiben.

15. Verfahren nach einem der Patentansprüche 11 bis 14, **dadurch gekennzeichnet, dass** durch Hebelübersetzung, Nocken und Anschläge (19) ein elastischer Mitnehmer über die Transportgeschwindigkeit hinaus beschleunigt wird.

## Claims

1. Apparatus for the transport of good (1) as segments or spatial objects which are transportable spaced apart from each other in horizontal orientation in a transport plane (4) by at least lower, rotatingly driven conveying means (2) in an in-line plant or on other transporting plants, wherein in transport direction (21) at least one correction means (10) is arranged perpendicular to the transport direction between the conveying means (2), **characterized in that** the conveying means are provided as transport rollers, rolls, discs, or wheels and that the correction means only temporarily penetrates the transport plane (4) in the region of a cross gap (12) between two goods following each other, performing in this orientation a limited motion in transport direction which is faster than the nominal transport velocity of the good.

2. Apparatus according to claim 1, **characterized in that** the limitation of the motion of the correction means as catches (10) in transport direction of the good takes place independent from the current slip by construction elements as end stops (19) or limit stops.

3. Apparatus according to claim 1 or 2, **characterized in that** the motions of the correction means are derived from the rotating motions of the conveying means using cams (23, 25).

4. Apparatus according to claim 1 or 2, **characterized in that** the motions of the correction means take place using electrical or pneumatic drives.

5. Apparatus according to claim 2 or 3, **characterized in that** an at least partially elastic catch (10) is accelerated in transport direction by means of leverage in the region of the penetration of the transport plane using cams (23, 25), end stops (19), and/or consoles (26).

6. Apparatus according to any of claims 2 to 5, **characterized in that** a rigid catch is controlled and moved by cams which are arranged on two transport rollers (2) following each other in transport direction.

7. Apparatus according to any of claims 2 to 6, **characterized in that** the motions of the catch are initiated by a sensor for detecting the cross gaps between two succeeding goods.

8. Apparatus according to any of claims 1 to 7, **characterized in that** for good which always has the same length in transport direction and which is continuously fed with an identically long cross gap, in connection with synchronized drive means of the in-line plant and with each drive means having a circumference that is in a fixed mathematic relation to the length of the good plus the length of the cross gap, the motion(s) of the correction means take place using cams, wherein these cams are adjusted in their phase position such that the cross gap between two succeeding goods is always met collision-free when the catches penetrate through the transport plane.

9. Apparatus according to any of claims 1 to 8, **characterized in that** the circumference of each drive means corresponds to the length of the good plus the length of the cross gap, or is an integer multiple of this sum.

10. Apparatus according to any of claims 1 to 9, **characterized in that** the correction means (10) are arranged at the lower transport rollers (2) or at upper drive means.

11. Method for the transport of good (1) as segments or spatial objects which are transportable spaced apart from each other in horizontal orientation in the transport plane (4) by at least lower, rotatingly driven conveying means (2) as transport rollers, rolls, discs, or wheels in an in-line plant or on other transporting plants, by using the apparatus as defined in claim 1, **characterized in that** a good which lags behind due to slip is pushed in transport direction (21) by at least one catch (10) with a velocity being higher than the transport velocity when a cross gap (12) is located between two succeeding goods in the flying range of the catch.

12. Method according to claim 11, **characterized in that** the fast short-term advancement takes place until the complete correction of the slip, or beyond this correction up to the maximum allowable slip.

13. Method according to claim 11 or 12, **characterized in that** synchronized driven transport means and cams (23) control and drive the motions of the catch for correcting the slip, namely penetrating the transport plane, fast carrying or pushing forward of the good, and immediate subsequent leaving of the transport plane by means of the catch in direction of the initial position.

14. Method according to any of claims 11 to 13, **characterized in that** the motions of the catches using cams (23, 25) are controlled and driven by synchronized drive means of the rotating transport means (2), the latter having a circumference that corresponds to the length of the good in transport direction plus the length of the cross gap in the same direction.

15. Method according to any of claims 11 to 14, **characterized in that** an elastic catch is accelerated beyond the transport velocity by means of leverage, cams, and end stops (19).

## Revendications

1. Dispositif pour le transport de biens (1) tels que des sections ou des objets tridimensionnels qui sont déplacés à distance régulière dans une direction horizontale au plan de transport (4) par des transporteurs (2), au moins ceux en dessous de ce plan, actionnés par des arbres rotatifs dans une chaîne continue ou autre installation transporteuse, dans lequel dans la direction du transport (21) au moins un dispositif de correction (10) est monté perpendiculairement au sens du transport entre les transporteurs (2), **caractérisé en ce que** les transporteurs sont des cylindres à piste, des rouleaux, des disques ou des roues, et le dispositif de correction pénètre périodiquement dans le plan du transport (4) dans l'espace (12) entre deux biens successifs et à cet endroit effectue un mouvement limité dans le sens du transport qui est plus rapide que la vitesse de transport des biens.

2. Dispositif selon la revendication 1, **caractérisé en ce que** la limitation du mouvement des dispositifs de correction tels que des taquets d'entrainement (10) est produite dans le sens du transport des biens indépendamment du glissement momentané par des éléments de construction tels que des butées (19) ou des limiteurs de mouvement.

3. Dispositif selon la revendication 1 ou 2, **caractérisé en ce que** le déplacement des dispositifs de correction est transmise par des ergots (23, 25) à partir du mouvement rotatif des transporteurs.

4. Dispositif selon la revendication 1 ou 2, **caractérisé en ce que** le déplacement des dispositif de correction (10, 22) se produit par une impulsion électrique ou pneumatique.

5. Dispositif selon la revendication 2 ou 3, **caractérisé en ce que** un taquet d'entrainement en partie au moins élastique est avancé en accélérant par transmission du mouvement d'ergots (23, 25), de butées (19) et/ou de consoles (26) dans l'espace où il pénètre dans le plan du transport dans le sens du transport.

6. Dispositif selon l'une quelconque des revendications 2 à 5, **caractérisé en ce que** un taquet d'entrainement rigide est guidé et déplacé par des ergots qui sont situés sur deux cylindres à piste (2) successifs dans le sens du transport.

7. Dispositif selon l'une quelconque des revendications 2 à 6, **caractérisé en ce qu'**un capteur pour la détection de l'espace entre deux biens successifs initie le mouvement du taquet d'entrainement.

8. Dispositif selon l'une quelconque des revendications 1 à 7, **caractérisé en ce que** pour un bien qui a toujours de la même longueur dans le sens du transport et qui est disposé de manière continue avec un espace intermédiaire de même longueur, le mouvement du ou des dispositifs de correction se produit par des ergots en liaison avec les dispositifs de propulsion synchronisés de la chaîne continue et avec le périmètres de ces dispositifs de propulsion qui est relation mathématique fixe avec la longueur des biens plus la longueur de l'espace intermédiaire , ces ergots étant positionnés dans une telle relation de phase que lors de l'avancée du taquet d'entrainement dans le plan du transport, l'espace intermédiaire entre deux biens successifs est atteint sans collision.

9. Dispositif selon l'une quelconque des revendications 1 à 8, **caractérisé en ce que** le périmètre des dispositifs de propulsion correspond à la longueur du bien plus la longueur de l'espace intermédiaire, ou à un multiple entier de cette somme.

10. Dispositif selon l'une quelconque des revendications 1 à 9, **caractérisé en ce que** les dispositifs de correction (10) sont localisés sur les cylindres à piste inférieurs (2) ou sur les dispositifs de propulsion supérieurs.

11. Dispositif pour le transport de biens (1) tels que des sections ou des objets tridimensionnels qui sont déplacés à distance régulière dans une direction horizontale au plan de transport (4) par des transporteurs (2), au moins ceux en dessous de ce plan, actionnés par des arbres rotatifs tels que des cylindres à piste, des cylindres, des rouleaux, des disques ou des roues dans une chaîne continue ou autre installation transporteuse, en utilisant le dispositif selon la revendication 1, **caractérisé en ce que** un bien retardé par un glissement est poussé dans le sens du transport (21) par au moins un taquet d'entrainement (10) avec une vitesse qui est supérieure à la vitesse de transport (21) lorsque un espace intermédiaire (12) entre deux biens successifs se trouve dans le rayon d'action du taquet.

12. Procédé selon la revendication 11, **caractérisé en ce que** la poussée vers l'avant rapide et courte se produit jusqu'à la correction complète du glissement ou au delà de cette correction, jusqu'au glissement maximal autorisé.

13. Procédé selon la revendication 11 ou 12, **caractérisé en ce que** les dispositifs de transport et les ergots (23) propulsés de façon synchrone guident et provoquent les mouvements des taquets d'entrainement pour corriger le glissement, à savoir pénétration dans le plan du transport, butée respectivement poussée rapide du bien et en suivant immédiatement retrait du plan de transport par le taquet en direction de la position de départ.

14. Procédé selon l'une quelconque des revendications 11 à 13, **caractérisé en ce que** les propulsions synchronisées des dispositifs de transport rotatifs (2), qui de leur coté ont un périmètre qui correspond à la longueur du bien plus la longueur de l'espace intermédiaire dans le sens du transport, guident et provoquent le mouvement des taquets d'entrainement au moyen d'ergots (23, 25).

15. Procédé selon l'une quelconque des revendications 11 à 14, **caractérisé en ce que** un taquet d'entrainement élastique est avancé par des transmissions à levier, des ergots et des butées (19) en accélérant au delà de la vitesse de transport.
